# EUROPÄISCHE PATENTSCHRIFT

(11) **EP 2 184 822 B1**
(45) Veröffentlichungstag und Bekanntmachung des Hinweises auf die Patenterteilung: **29.06.2016**
(21) Anmeldenummer: 08019315.4
(22) Anmeldetag: 05.11.2008
(51) Int. Cl.: H02K 5/132, H02G 3/22

(54) **Tauchmotor**
Submersible motor
Moteur submersible

(43) Veröffentlichungstag der Anmeldung: 12.05.2010
(73) Patentinhaber: Grundfos Management A/S, 8850 Bjerringbro (DK)
(72) Erfinder: Dybdal, Soren, 3460 Birkerod (DK)
(74) Vertreter: Hemmer, Arnd

(56) Entgegenhaltungen:
- DE-A1- 2 114 450
- DE-A1- 3 833 370
- FR-A- 2 567 239
- US-A- 4 593 940
- US-A- 5 801 465
- US-B1- 7 071 588

## Beschreibung

Die Erfindung betrifft einen Tauchmotor sowie eine Tauchpumpe mit einem solchen Tauchmotor.

Tauchmotoren sind während ihres Betriebes üblicherweise vollständig in Flüssigkeit, wie beispielsweise Wasser, eingetaucht. Ein solcher Tauchmotor ist ein typischer Bestandteil einer Tauchpumpe bzw. eines Tauchpumpenaggregates und zusammen mit der Tauchpumpe innerhalb eines gemeinsamen Tauchpumpengehäuses gelegen. Regelmäßig werden Tauchmotoren dabei über elektrische Zuleitungen mit elektrischer Energie versorgt. Zur elektrischen Versorgung ist es erforderlich, Leitungskabel wasserdicht in das Tauchmotor- bzw. Tauchpumpengehäuse hineinzuführen.

Ein wasserdichter Kabeldurchlass zur Stromversorgung eines Tauchmotors ist beispielsweise aus DE 42 13 306 C1 bekannt. Bei Tauchmotoren mit solchen Kabeldurchlässen jedoch können, insbesondere bei einer Demontage des Leitungskabels vom Tauchmotorgehäuse, leicht Fremdstoffe, wie z. B. Partikel oder Schmutz, in die Dichtung gelangen. Dies kann auf Dauer zu einer Einschränkung oder gar zu einem vollständigen Verlust der Dichtwirkung des Kabeldurchlasses führen, so dass die Funktionstüchtigkeit des Tauchmotors nicht mehr gewährleistet ist.

US 5,801,465 offenbart einen gedichteten Anschlussstecker, bei welchem in einer Wandung des Motors eine Isolierplatte mit Anschlusssteckkontakten gedichtet eingesetzt ist. Von außen kann ein Anschlussstecker mit einem zwischengelegten O-Ring gedichtet an das Gehäuse angeschraubt werden. An dem Anschlussstecker ist eine elektrische Anschlussleitung wiederum durch eine Dichtung, welche durch Schrauben befestigt ist, gedichtet nach außen geführt.

DE 38 33 370 A1 offenbart eine lösbare mediendichte Durchführung, bei der ein Metallmantelkabel derart durch eine Behälterwandung hindurch geführt ist, dass es in einer Durchführung durch eine Packung eines pulverförmigen Dichtmittels geführt wird und die Durchführung ihrerseits mittels eine O-Ringdichtung an der Gehäusewandung gedichtet ist. Die Kraftbeaufschlagung der Packung geschieht mit einer Tellerfeder.

FR 2 567 239 A betrifft die Durchführung einer fiberoptischen Kabels durch eine Gehäusewandung. Allerdings ist diese Durchführung nicht wasserdicht ausgebildet und somit für einen Tauchmotor nicht geeignet.

US 7,071,588 B1 offenbart einen Kabelverbinder zum Anschluss eines Anschlusskabels an eine Pumpe. Dazu ist eine Kabelkappe vorgesehen, durch welche das Kabel gedichtet geführt ist und welche an ein Pumpengehäuse anschraubbar ist. Im Inneren der Kappe ist eine Dichtung vorgesehen, welche geklemmt wird, um dichtend mit dem Kabel in Anlage gebracht zu werden. Nachteilig bei dieser Durchführung ist, dass die Dichtigkeit langfristig bei Verlust der Elastizität der Dichtung nicht immer sichergestellt werden kann.

Im Hinblick auf den zitierten Stand der Technik ist es Aufgabe der Erfindung, einen Tauchmotor und eine Tauchpumpe dahingehend zu verbessern, dass ein langfristig zuverlässig dichter Kabeldurchlass geschaffen wird.

Diese Aufgabe wird durch einen Tauchmotor mit den in Anspruch 1 angegebenen Merkmalen sowie durch eine Tauchpumpe mit den in Anspruch 13 angegebenen Merkmalen gelöst. Vorteilhafte Ausgestaltungen der Erfindung ergeben sich aus den Unteransprüchen, der Beschreibung sowie den Figuren.

Der erfindungsgemäße Tauchmotor umfasst ein Gehäuse, welches eine Wandung mit einem wasserdichten Kabeldurchlass aufweist. Dieser Kabeldurchlass umfasst einen Einlass in der Wandung für ein Kabel und einen vom Einlass lösbaren Dichtkragen mit einer Durchführung für das Kabel. Der Dichtkragen weist eine an der Durchführung angeordnete erste Dichtung und ein Mittel zur Kraftbeaufschlagung der ersten Dichtung auf. Letzteres ist dabei zur dauerhaften Kraftbeaufschlagung der ersten Dichtung radial in die Durchführung ausgebildet. Darüber hinaus weist der Kabeldurchlass Mittel zur lösbaren Befestigung des Dichtkragens am Einlass auf, wobei zwischen Dichtkragen und Einlass zumindest eine zweite Dichtung vorgesehen ist.

Bei dem erfindungsgemäßen Tauchmotor lässt sich das Kabel in das Gehäuse des Tauchmotors führen, indem das Kabel zum einen durch die Durchführung des Dichtkragens geführt wird. Die dauerhafte radiale Kraftbeaufschlagung der ersten Dichtung in die Durchführung hinein hält die Dichtung dauerhaft dicht an dem Kabel in Anlage. So wird eine dauerhafte Dichtung zwischen Kabel und Dichtkragen hergestellt. Der Dichtkragen ist ferner dicht und lösbar mit der Wandung des Gehäuses verbunden, indem die zweite Dichtung eine dichtende Anlage des Dichtkragens am Einlass ermöglicht. Dabei überlappen sich die gehäuseseitige Öffnung der Durchführung des Dichtkragens und die außenseitige Öffnung des Einlasses in der Wandung, so dass das Kabel in das Innere des Tauchmotors gelangt. Damit ist der Kabeldurchlass wasserdicht ausgebildet, indem das Kabel mit der ersten Dichtung wasserdicht im Dichtkragen und der Dichtkragen mit der zweiten Dichtung wasserdicht am Einlass der Gehäusewandung gelegen ist. Das Kabel kann dabei von der Wandung des Gehäuses des Tauchmotors gelöst werden, indem der Dichtkragen vom Einlass der Wandung gelöst wird. Umgekehrt kann das Kabel an die Wandung montiert werden, indem der Dichtkragen in den Einlass in der Wandung montiert wird.

Unter einer dauerhaften Kraftbeaufschlagung der ersten Dichtung radial in die Durchführung ist im Sinne dieser Erfindung zum einen eine solche Kraftbeaufschlagung zu verstehen, die auch nach einem langen Zeitraum und einem möglicherweise damit einhergehendem Nachlassen der Elastizität der ersten Dichtung selber, beispielsweise durch plastische Verformung oder Verspröden, eine dichtende Anlage der ersten Dichtung an dem Kabel bewirkt. Dies erfolgt durch eine dauerhafte äußere Kraftbeaufschlagung der ersten Dichtung, wie sie unten beschrieben ist. Auf diese Weise bleibt der Kabeldurchlass dauerhaft wasserdicht, so dass ein erfindungsgemäßer Tauchmotor weniger häufig gewartet werden muss.

Zum anderen kann unter einer dauerhaften Kraftbeaufschlagung der ersten Dichtung radial in die Durchführung zudem eine solche Kraftbeaufschlagung zu verstehen sein, die auch bei einer Demontage des Kabels von der Gehäusewandung weiterhin andauert. Bevorzugt ist dabei die erste Dichtung zur dauerhaft dichtenden Anlage am Kabel und an einem Innenumfang der Durchführung unabhängig von der Befestigung des Dichtkragens am Gehäuse vorgesehen. Auf diese Weise ist es möglich, den Dichtkragen vom Einlass in der Gehäusewandung zu lösen, während das Kabel weiterhin wasserdicht in der Durchführung des Dichtkragens gelegen ist. Damit wird vermieden, dass bei demontiertem Dichtkragen Partikel oder Schmutz zwischen die erste Dichtung und das Kabel gelangen und dabei die erste Dichtung verschmutzen oder beschädigen. Somit ist auch bei einer erneuten Montage des Kabels eine weiterhin zuverlässige Dichtung gewährleistet.

Die erste Dichtung ist aus einem weichelastischen Material gebildet. Ein solches Material kann sich geeignet an einen Abschnitt der Außenumfangsfläche des Kabels anpassen. Auf diese Weise beeinträchtigen Unebenheiten der Kabelummantelung oder Abweichungen von den exakten vorgesehenen Toleranzen die Dichtwirkung der ersten Dichtung nicht. Bevorzugt handelt es sich bei dem weichelastischen Material um Gummi oder ein Elastomer. Ferner ist die Dichtung zweckmäßigerweise ein Dichtring, welcher die Längsachse der Durchführung für das Kabel umfänglich umgibt.

In einer bevorzugten Ausgestaltung ist bei dem Tauchmotor die erste Dichtung umfänglich von einem Dichtkragengehäuse umgeben. Besonders bevorzugt ist das Dichtkragengehäuse entlang eines axialen Abschnitts des Dichtkragens als Ummantelung der ersten Dichtung, bespielsweise in Form einer Hülse, ausgebildet. Ferner bevorzugt bildet das Dichtkragengehäuse zumindest einen Teil der Durchführung. Die erste Dichtung ist bevorzugt ringförmig und liegt mit ihrem Innenumfang dichtend am Kabel und mit ihrem Außenumfang an der Innenwandung des Dichtkragengehäuses an. So kann die Dichtung in radialer Richtung vorgespannt werden.

Das Mittel zur Kraftbeaufschlagung der ersten Dichtung umfasst zwei Klemmflächen, zwischen welchen die erste Dichtung gelegen und mittels welchen die erste Dichtung derart axial kraftbeaufschlagt ist, dass die Dichtung radial in die Durchführung und gegen das Kabel gedrückt wird. Die erste Dichtung ist dabei wie zuvor beschrieben aus weichelastischem Material gebildet, welches an einem Innenumfang der Durchführung bzw. des Dichtkragengehäuses anliegt. Die axiale Kraftbeaufschlagung der ersten Dichtung mittels der Klemmflächen führt nun dazu, dass das Material der ersten Dichtung axial gestaucht wird und radial ausweicht. Da die erste Dichtung am Innenumfang der Durchführung anliegt, dringt das Material der ersten Dichtung radial nach innen in die Durchführung hinein und wird gegen ein dort gelegenes Kabel gepresst.

Eine dauerhafte Kraftbeaufschlagung der ersten Dichtung in die Durchführung hinein erfolgt mit einem Mittel zur Kraftbeaufschlagung der ersten Dichtung, welches zumindest ein in axialer Richtung wirkendes Druckfederelement aufweist. Dieses Druckfederelement kraftbeaufschlagt zumindest eine der Klemmflächen. Vorzugsweise ist dabei das Druckfederelement gegenüber seiner Ruhelage axial gestaucht und somit vorgespannt. Auf diese Weise liegt das Druckfederelement auch bei geänderter axialer Länge der ersten Dichtung unter Spannung an dieser an. Selbst wenn also die erste Dichtung mit der Zeit an Elastizität verliert und sich beispielsweise plastisch verformt, erfolgt über das Druckfederelement weiterhin eine hinreichend hohe Kraftbeaufschlagung. Es kann somit eine Anlagekraft an der Dichtfläche zwischen Kabel und Dichtung unabhängig von der Eigenspannung der Dichtung sichergestellt werden.

Zweckmäßigerweise ist das Druckfederelement eine Tellerfeder oder ein Tellerfederpaket. Tellerfedern weisen vorteilhaft große Federkonstanten auf und bewirken daher eine hohe Kraftbeaufschlagung der ersten Dichtung und folglich eine hohe Dichtwirkung. Das Druckfederelement ist in bevorzugter Ausgestaltung derart orientiert, dass es in Richtung der Längsachse der Durchführung wirkt. Das Druckfederelement weist eine zentrale, koaxial mit der Durchführung orientierte Öffnung auf, so dass es die Durchführung des Dichtkragens umfänglich umgibt. Weiter bevorzugt stößt sich das Druckfederelement an einer lösbar am Dichtkragen angeordneten Stirnwand ab. Die Lösung dieser Stirnwand vom Dichtkragengehäuse ermöglicht dabei eine vollständige Entspannung des Druckfederelementes. Auf diese Weise lässt sich die Kraftbeaufschlagung der ersten Dichtung aufheben. So kann beispielsweise ein Kabel in die Durchführung des Dichtkragens eingebracht werden oder bei Bedarf ausgewechselt werden.

Gemäß einer vorteilhaften Weiterbildung der Erfindung weisen bei dem Tauchmotor die Mittel zur Befestigung des Dichtkragens an der Wandung eine zur Längsachse der Durchführung des Dichtkragens gewinkelte Anlagenfläche auf, welche am Dichtkragen angeordnet ist. Diese Anlagefläche erlaubt eine einfache Anlage des Dichtkragens an der Wandung des Tauchmotorgehäuses. Besonders bevorzugt erstreckt sich die Anlagefläche senkrecht zur Längsachse der Durchführung. Die Anlagefläche weist zur Befestigung an der Wandung zweckmäßigerweise Schraublöcher zur Schraubverbindung der Anlagefläche mit der Wandung auf.

In einer vorteilhaften Ausgestaltung ist bei dem Tauchmotor eine dritte Dichtung zur dichtenden Anlage am Außenumfang des Kabels und einem Innenumfang des Dichtkragengehäuses vorgesehen. Vorzugweise liegt dabei auch die dritte Dichtung an einem Innenumfang der Durchführung des Dichtkragengehäuses an. So wird eine größere Anlagefläche am Kabel- und somit eine erhöhte Haltekraft zwischen Kabel und Dichtungen in axialer Richtung erreicht. So wirkt die dritte Dichtung insbesondere als Zugentlastung für das Kabel. Auf diese Weise werden außerhalb des Gehäuses des Tauchmotors an dem Kabel angreifende, durch Zug verursachte Kräfte von den Dichtungen auf das Dichtkragengehäuse übertragen. Das innerhalb des Gehäuses des Tauchmotors gelegene Kabelende hingegen und insbesondere am Kabelende befindliche elektrische Kontakte werden durch Zug nicht belastet. Insbesondere kann die dritte Dichtung gehäuseauswärts der ersten Dichtung gelegen sein, so dass die dritte Dichtung zugleich eine Zugentlastung für einen an der ersten Dichtung gelegenen Abschnitt des Kabels darstellt und deren Dichtwirkung nicht durch angreifende Zugkräfte beeinträchtigt wird.

In einer weiteren bevorzugten Weiterbildung der Erfindung weist bei dem Tauchmotor der Dichtkragen ein Klemmelement zur Klemmung des Kabels auf. Dabei ist dieses Klemmelement insbesondere als Zugentlastung für das Kabel ausgebildet und lösbar mit dem Dichtkragengehäuse verbunden. Das Klemmelement überträgt die am Kabel angreifenden Zugkräfte auf das Gehäuse.

Vorzugsweise ist das Klemmelement gehäuseauswärts der ersten Dichtung gelegen. Damit wird das Kabel auch im Bereich der ersten Dichtung von Zugkräften entlastet.

So wird durch eine der zuvor beschriebenen Möglichkeiten zur Zugentlastung des Kabels auch eine durch Zug verursachte, entlang des Umfangs ungleichmäßige Kraftbeaufschlagung des Kabels im Bereich der ersten Dichtung vermieden. Eine entlang des Umfangs gleichmäßige Kraftbeaufschlagung des Kabels gewährleistet damit eine dauerhaft hohe Dichtwirkung der ersten Dichtung.

Bevorzugt weist bei dem Tauchmotor das Klemmelement eine die Durchführung für das Kabel umfänglich umgebende Fläche mit umfänglich orientierten Rippen auf. Insbesondere solche umfänglich orientierten Rippen verhindern einen Zug des Kabels entlang der Längsachse der Durchführung. Besonders bevorzugt ist das Klemmelement dabei als Spannring aus zwei zueinander kraftbeaufschlagbaren und umfänglich angeordneten Ringteilen ausgebildet. Auf diese Weise wird das Kabel durch das Klemmelement lösbar in Eingriff genommen, so dass das Kabel leicht vom Dichtkragen gelöst werden kann. Insbesondere weisen diese Ringteile sich vom Innenumfang radial nach außen erstreckende und einander gegenüberliegende Flächen auf, die miteinander und/oder mit dem Dichtkragengehäuse verschraubbar sind.

In einer vorteilhaften Weiterbildung umfasst bei dem Tauchmotor die zweite Dichtung zumindest einen Dichtring, welcher am Außenumfang des Dichtkragens angeordnet und zur Anlage am Innenumfang des Einlasses ausgebildet ist. In einer weiteren Ausgestaltung kann der Dichtring auch an dem Innenumfang des Einlasses angeordnet und zur Anlage am Außenumfang des Dichtkragens ausgebildet sein. Alternativ kann die zweite Dichtung auch axial zwischen dem Gehäuse des Tauchmotors und einem Teil des Dichtkragens gelegen sein und entweder an dem Gehäuse des Tauchmotors oder am Dichtkragen angeordnet sein.

Ferner bevorzugt weist bei dem Tauchmotor an einem von der ersten Dichtung aus gesehen in das Gehäuse hineinführenden Axialabschnitt der Durchführung eine elektromagnetische Abschirmung des Kabels auf. Die elektromagnetische Abschirmung des Kabels umfasst vorzugsweise einen Kranz metallischer Zungen, welche sich radial vom Dichtkragengehäuse nach innen strecken und am Außenumfang des Kabels gehäuseeinwärts gebogen und im spitzen Winkel anliegen.

Die erfindungsgemäße Tauchpumpe weist einen erfindungsgemäßen Tauchmotor auf. Bevorzugt ist der Tauchmotor mit weiteren Bestandteilen der Tauchpumpe in einem gemeinsamen Tauchpumpengehäuse gelegen, d.h. das Gehäuse des Tauchmotors ist durch das Tauchpumpengehäuse gebildet.

Die Erfindung wird nachfolgend anhand der in den Zeichnungen dargestellten Ausführungsbeispiele näher erläutert.

Es zeigen:
- Fig. 1: eine Tauchpumpe mit einem erfindungsgemäßen Tauchmotor in einem gemeinsamen Gehäuse mit einem wasserdichten Kabeldurchlass in einer vereinfachten Seitenansicht,
- Fig. 2: einen Ausschnitt des Gehäuses der Tauchpumpe gemäß Fig. 1 mit dem wasserdichten Kabeldurchlass im Längsschnitt,
- Fig. 3: den Dichtkragen des Kabeldurchlasses gemäß Fig. 2 in einer ersten Ausgestaltung im Längsschnitt,
- Fig. 4: den Dichtkragen gemäß Fig. 3 in einer axialen Draufsicht in gehäuseeinwärtiger Richtung,
- Fig. 5: den Dichtkragen gemäß Fig. 3 in einer axialen Draufsicht in gehäuseauswärtiger Richtung,
- Fig. 6: den Dichtkragen gemäß Fig. 3 in einer radialen Draufsicht,
- Fig. 7: den Dichtkragen gemäß Fig. 3 in einer perspektivischen Darstellung,
- Fig. 8: den Dichtkragen gemäß Fig. 3 in einer perspektivischen Darstellung und
- Fig. 9: eine zweite Ausgestaltung des Dichtkragens des wasserdichten Kabeldurchlasses der erfindungsgemäßen Tauchpumpe gemäß Fig. 1 im Schnitt.

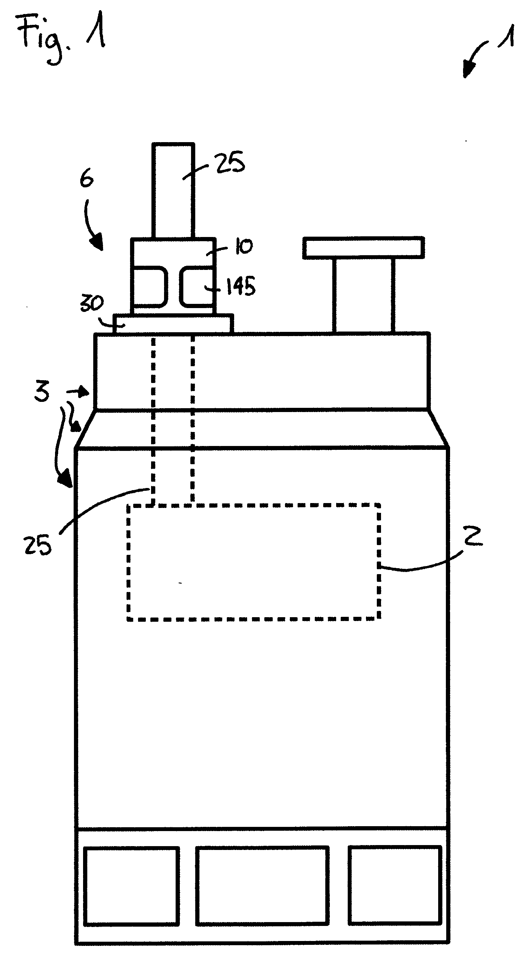

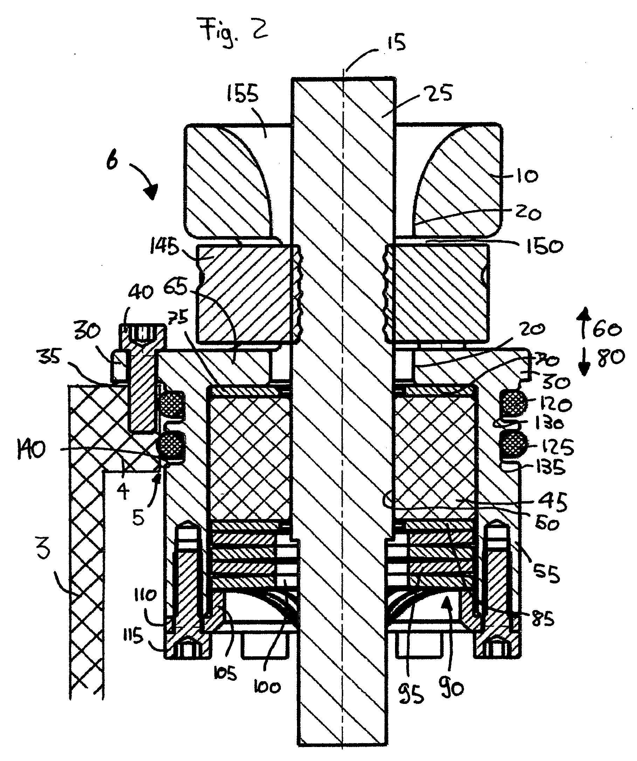

Die in Fig. 1 dargestellte Tauchpumpe 1 weist einen Tauchmotor 2 auf und ist mit diesem in einem gemeinsamen Gehäuse 3 angeordnet. Das Gehäuse 3 bildet somit zugleich das Gehäuse 3 der Tauchpumpe und das Gehäuse 3 des Tauchmotors 2. An einer Wandung 4 des Gehäuses 3 ist, wie in Fig. 2 dargestellt, ein wasserdichter Kabeldurchlass vorgesehen, welcher einen Einlass 5 in der Wandung 4 und einen Dichtkragen 6 umfasst.

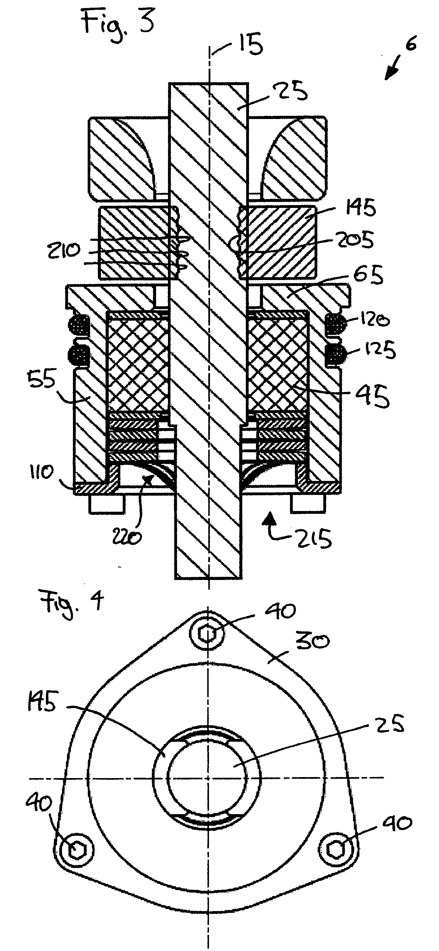

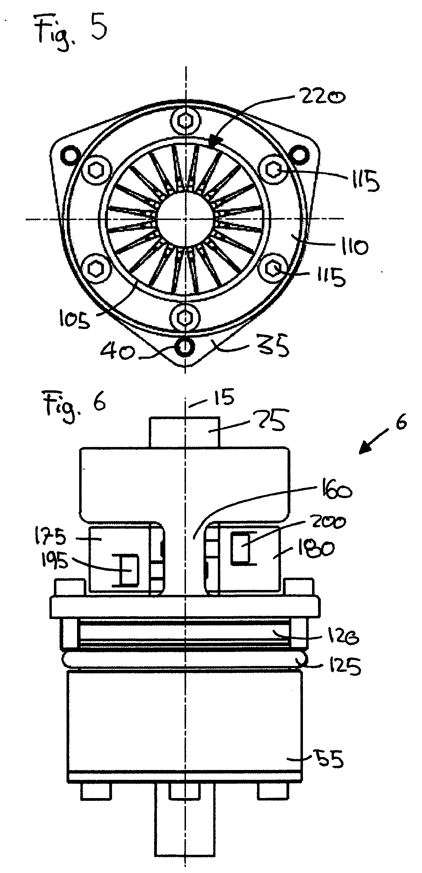

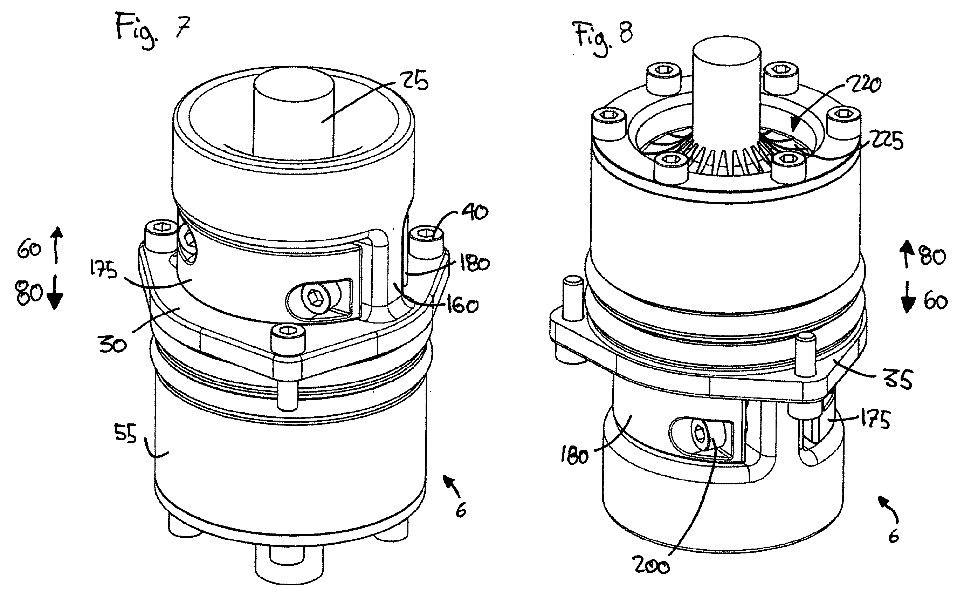

Der in den Fig. 2 bis 8 abgebildete Dichtkragen 6 umfasst ein im Wesentlichen rotationssymmetrisches Dichtkragengehäuse 10. Entlang der Längsachse 15 des Dichtkragengehäuses 10 erstreckt sich eine Durchführung 20, welche an jedem axialen Abschnitt einen kreisförmigen Querschnitt aufweist. Durch die Durchführung 20 lässt sich ein Kabel 25 durchführen, welches mittels des Dichtkragens 6 durch die Wandung 4 des Tauchpumpengehäuses 3 in das Innere der Tauchpumpe 1 durchgelassen wird.

Zur Befestigung des Dichtkragens 6 an der Wandung 4 weist der Dichtkragen 6 entlang des Außenumfanges des Dichtkragengehäuses 10 eine vollumfängliche Auskragung 30 auf, welche sich radial vom Dichtkragengehäuse 10 nach außen wegstreckt. Die Auskragung 30 des Dichtkragengehäuses 10 weist eine Anlagefläche 35 auf, welche bei Montage des Dichtkragens 10 an die Wandung 4 mit dieser zur Anlage kommt. Über Schrauben 40 ist die Auskragung 30 lösbar mit der Wandung 4 des Gehäuses 3 verschraubt. Die Auskragung 30 teilt das Dichtkragengehäuse 10 damit in zwei axiale Abschnitte: einen axialen Abschnitt, welcher zur Lage außerhalb des Gehäuses 3 der Tauchpumpe 1 vorgesehen ist, sowie einen zweiten axialen Abschnitt des Dichtkragens 6, welcher innerhalb des Einlasses 5 in der Wandung 4 des Pumpengehäuses 3 bzw. im Inneren des Pumpengehäuses 3 gelegen ist.

Zur dichtenden Anlage des Kabels 25 in der Durchführung 20 weist der Dichtkragen 6 eine erste Dichtung in Form eines Dichtringes 45 auf, welcher die Längsachse 15 der Durchführung 20 vollumfänglich umgibt. Dabei liegt die Innenumfangsfläche 50 des Dichtringes 45 an der Außenumfangsfläche des Kabels 25 an. Die Dichtung 45 ist außenumfänglich von einer Hülse 55 umgeben, welche einen Teil des Dichtkragengehäuses 10 bildet. Die Hülse 55 endet in einer einer vom Dichtring 45 aus gesehen gehäuseauswärtigen Richtung 60 in einer Stirnwand 65, welche die Auskragung 30 radial nach innen in Richtung zur Längsachse 15 fortsetzt.

In axialer, gehäuseauswärtiger Richtung 60 liegt der Dichtring 45 an einer dünn und flach ausgebildeten Scheibe 75 an. Die Scheibe 75 ist dabei an der Innenseite 70 der Stirnwand 65 der Hülse 55 gelegen und bildet eine erste von zwei Klemmflächen für die erste Dichtung. Die Scheibe 75 erstreckt sich im Wesentlichen radial zur Längsachse 15 des Dichtkragens 6 und umgibt diese umfänglich. Dazu weist sie eine zentrale, koaxial mit der Durchführung 20 orientierte Öffnung auf. In der gehäuseeinwärtigen Richtung 80 liegt der Dichtring 45 an einer zweiten Scheibe 85 an, welche die zweite der beiden Klemmflächen bildet. Die zweite Scheibe 85 ist wie die erste Scheibe 75 dünn und flächig ausgebildet und erstreckt sich im Wesentlichen radial und umfänglich um die Längsachse 15 des Dichtkragens 6. Die Scheibe 85 weist dabei ebenfalls eine zentrale, koaxial mit der Durchführung 20 orientierte Öffnung auf, durch welche das Kabel 25 durchgeführt werden kann.

Mit den beiden Scheiben 75, 85 wird der Dichtring 45 im in den Figuren dargestellten montierten Zustand des Dichtkragens 6 radial in die Durchführung 20 hinein, d.h. gegen den Außenumfang eines eingesetzten Kabels, kraftbeaufschlagt. Dazu wird die Scheibe 85 in axiale Richtung entlang der Längsachse 15 zu der Scheibe 75 hin kraftbeaufschlagt, so dass der elastische Dichtring 45 in axialer Richtung gestaucht wird. In radialer Richtung nach außen ist das Material des Dichtrings 45 durch die Hülse 55 an einer Ausdehnung gehindert. Daher führt die axiale Stauchung des Dichtrings 45 zu seiner Ausdehnung in radialer Richtung nach innen in die Durchführung 15 hinein. Die axiale Stauchung resultiert also in einer auf die Längsachse 15 des Dichtkragens 6 zu gerichteten Kraftbeaufschlagung des Kabels 25 durch die erste Dichtung.

Die axiale Kraftbeaufschlagung der Scheibe 85 in Richtung auf die Scheibe 75 erfolgt durch eine als Tellerfederpaket 90 ausgebildete Druckfeder, welche aus mehreren Tellerfedern 95 besteht. Das Tellerfederpaket 90 ist dabei derart orientiert, dass die von ihm ausgeübte Druckkraft in Richtung der Längsachse 15 des Dichtkragens 6 wirkt. Das Tellerfederpaket 90 ist im Wesentlichen mit demselben Außenumfang ausgebildet, wie der elastische Dichtring 45 der ersten Dichtung und liegt wie diese am Innenumfang der Hülse 55 an. Das Tellerfederpaket 90 weist eine zentrale, koaxial zu der Längsachse 15 der Durchführung 20 orientierte Aussparung 100 auf, durch welche das Kabel 25 geführt werden kann. Das Tellerfederpaket 90 ist dabei zusammen mit den Scheiben 75 und 85 sowie der Hülse 55 Bestandteil des Mittels zur Kraftbeaufschlagung des Dichtringes 45. Das Tellerfederpaket 90 ist axial gestaucht angeordnet und daher zur Ausübung einer Druckkraft vorgespannt. Das Tellerfederpaket 90 kann daher eine axiale Längenänderung des Dichtrings 45 ausgleichen, so dass die Scheibe 85 stets mit Druck am Dichtring 45 anliegt. In dieser Ausgestaltung wird der Dichtring 45 folglich auch dann mit einer Druckkraft beaufschlagt, wenn das elastische Material des Dichtrings 45 mit fortschreitender Zeit an Elastizität verliert und sich plastisch verformt und dabei möglicherweise auch axial verkürzt.

Die Tellerfeder 90 stützt sich in gehäuseeinwärtiger Richtung 80 an einem sich axial entlang der Innenumfangsfläche 50 der Hülse 55 erstreckenden Vorsprung 105 ab. Der Vorsprung 105 kragt vollumfänglich an der radial innengelegenen Seite der Hülse 55 aus einer Deckplatte 110 aus, welche die Hülse 55 in gehäuseeinwärtiger Richtung 80 stirnseitig abschließt. Die Deckplatte 110 ist lösbar mittels Schrauben 115 an die Hülse 55 geschraubt. Beim Festschrauben der Deckplatte 110 an die Hülse 55 schiebt sich der Vorsprung 105 axial in die Hülse 55 hinein und staucht die Tellerfeder 90 axial. Diese übt daher eine Druckkraft auf die Scheibe 85 aus. Über die Montage der Deckplatte 110 wird also die Tellerfeder 90 zur Ausübung der Druckkraft auf die Scheibe 85 und damit auf den Dichtring 45 geeignet vorgespannt.

Darüber hinaus ist der Dichtkragen lösbar und dicht an der Wandung 4 des Gehäuses 3 der Tauchpumpe 1 befestigt. Dazu sind nahe der Auskragung 30 an der Hülse 55 des Dichtkragengehäuses 10 zwei Dichtringe 120, 125 befestigt. Die beiden Dichtringe 120, 125 umlaufen jeweils zueinander geringfügig axial versetzt außenumfänglich die Hülse 55 des Dichtkragengehäuses 10. Zur axialen Arretierung der Dichtringe 120, 125 sind diese in umfänglich verlaufenden Nuten 130, 135 um die Hülse 55 gespannt. Ist der Dichtkragens 6 an der Wandung 4 des Gehäuses 3 der Tauchpumpe 1 befestigt wie in Fig. 2 gezeigt, sind die beiden Dichtringe 120, 125 an der Innenseite 140 des Einlasses 5 axial dichtend in Anlage.

In gehäuseauswärtiger Richtung 60 schließt sich an die Auskragung 30 ein Klemmelement in Form eines Spannringes 145 an. Dazu weist dieser Axialabschnitt des Dichtkragengehäuses 10 zwei kreissegmentförmige Aussparungen 150 auf, welche an radial entgegengesetzten Seiten der Durchführung 20 gelegen sind. In diesen Aussparungen 150 ist der zweiteilige Spannring 145 eingebracht. Die Auskragung 30 bzw. die Stirnwand 65 der Hülse 55 sind mit dem an der gehäuseauswärts gewandten Öffnung 155 liegenden Teil des Dichtkragengehäuses 10 über zwei schmale, an der Durchführung 20 einander diametral gegenüberliegende Stege 160 miteinander verbunden, welche die beiden Aussparungen 150 voneinander trennen.

Der Spannring 145 umfasst zwei nahezu halbumfängliche Reife 175, 180, welche zur Klemmung des Kabels 25 mit den Stegen 160 verbunden sind. Dazu weisen die Stege 160 Gewinde auf, an welche die Reife 175, 180 mit Schrauben 195, 200 angeschraubt sind. Im verschraubten Zustand weist der Innendurchmesser des so gebildeten Spannringes 145 einen kleineren Durchmesser auf, als das kraftunbeaufschlagte Kabel 25. Daher ist das Kabel 25 durch den an den Stegen 160 geschraubten Spannring 145 in der Durchführung 20 axial fest arretiert. Zusätzlich weist der Innenumfang des Spannringes 145 eine profilierte Klemmfläche 205 auf. Das Profil der Klemmflächen 205 wird durch Klemmrippen 210 gebildet, welche sich in umfänglicher Richtung erstrecken und das Kabel 25 an einer axialen Verschiebung hindern.

Der Spannring 145 bildet eine Zugentlastung für das im Gehäuse 3 der Tauchpumpe 1 gelegene Ende des Kabels 25. Auf diese Weise belasten Zugkräfte, also in gehäuseauswärtiger Richtung 60 wirkende und außerhalb des Gehäuses 3 am Kabel 25 angreifende Kräfte, das gehäuseinnere Ende des Kabels 25 nicht. Daher sind die am gehäuseinneren Ende des Kabels 25 gelegenen elektrischen Anschlusskontakte gegenüber am Kabel 25 angreifenden Zugkräften geschützt. Vielmehr wirken diese Zugkräfte über den Spannring 145 auf das Dichtkragengehäuse 10. Ferner ist der Spannring 145 auch gehäuseauswärts des Dichtrings 45 der ersten Dichtung gelegen. Daher wirken insbesondere auch keine Zugkräfte und insbesondere keine asymmetrischen, d. h. gewinkelt zur Längsachse 15 der Durchführung 20 orientierten Kräfte auf den Dichtring 45 der ersten Dichtung. Somit gewährleistet der Spannring 145 gleichzeitig auch eine dauerhaft hohe Dichtwirkung des Dichtringes 45.

Darüber hinaus weist der Dichtkragen 5 an seiner gehäuseeinwärts gewandten Öffnung 215 eine elektromagnetische Abschirmung 220 auf, welche als Kranz metallischer Zungen 225 ausgebildet ist. Die Zungen 225 sind umfänglich um die Längsachse 15 des Dichtkragens 5 verteilt. Die Zungen ragen in radialer Richtung in die Durchführung 20 hinein, solange sich in dieser kein Kabel 25 befindet. Ein durchgeführtes Kabel 25 jedoch biegt die Zungen 225 von der radialen Richtung in axiale, gehäuseeinwärtsweisende Richtung um, so dass die Zungen 225 im spitzen Winkel und schleifend an der Außenumfangsfläche des Kabels 25 anliegen.

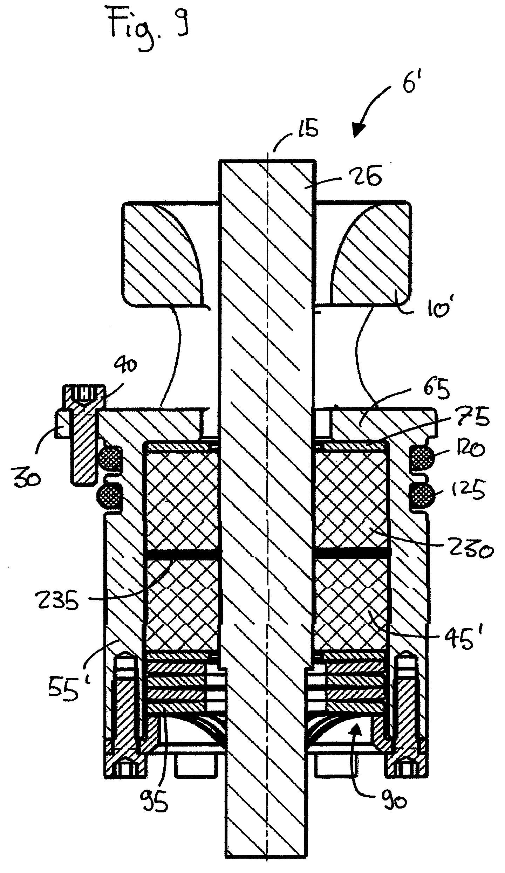

Fig. 9 zeigt eine weitere Ausgestaltung eines Dichtkragens 6' einer erfindungsgemäßen Tauchpumpe. Dieser Dichtkragen 6' ist ähnlich dem zuvor beschriebenen Dichtkragen 6 ausgebildet, unterscheidet sich jedoch von diesem darin, dass der Dichtkragen 6' anstelle eines Spannrings 145 eine zweiteilige Dichtung innerhalb der Hülse 55' aufweist. Dort sind anstelle des Dichtrings 45 der ersten Dichtung ein an der Tellerfeder 90 anliegender Dichtring 45' als erste Dichtung sowie gehäuseauswärts von diesem ein weiterer Dichtring 230 als dritte Dichtung vorgesehen. Dieser liegt zwischen dem Dichtring 45 und der stirnseitig an der Stirnseite 65 der Hülse 55' liegenden Scheibe 75 an. Die beiden Dichtringe 45', 230 sind durch eine weitere flache, kreisringartige Scheibe 235, welche gleich den Scheiben 75 und 85 ausgebildet und orientiert ist, voneinander getrennt.

Diese Ausgestaltung bildet gehäuseauswärts der ersten Dichtung eine reibschlüssige Verbindung von Kabel 25 und Dichtkragengehäuse 10'. Auf diese Weise können am Kabel 25 angreifende Zugkräfte durch die dritte Dichtung vollständig auf das Dichtkragengehäuse 10' übertragen werden. Daher kann auf andere zusätzliche Klemmelemente, wie etwa den zuvor beschriebenen Spannring 145, verzichtet werden kann. Somit stellt der Dichtring 230 der dritten Dichtung eine alternative Ausbildung einer Zugentlastung dar, die gemeinsam mit dem Dichtring 45' der ersten Dichtung innerhalb der Hülse 55' gelegen ist.

### Bezugszeichenliste

| | | |
|---|---|---|
| 1 | - | Tauchpumpe |
| 2 | - | Tauchmotor |
| 3 | - | Gehäuse der Tauchpumpe 1 |
| 4 | - | Wandung des Gehäuses 2 |
| 5 | - | Einlass |
| 6, 6' | - | Dichtkragen |
| 10, 10' | - | Dichtkragengehäuse |
| 15 | - | Längsachse |
| 20 | - | Durchführung |
| 25 | - | Kabel |
| 30 | - | Auskragung |
| 35 | - | Anlagefläche |
| 40 | - | Schrauben |
| 45, 45' | - | Dichtring/erste Dichtung |
| 50 | - | Innenumfangsfläche |
| 55, 55' | - | Hülse |
| 60 | - | Gehäuseauswärtige Richtung |
| 65 | - | Stirnwand |
| 70 | - | Innenseite |
| 75 | - | Scheibe |
| 80 | - | Gehäuseeinwärtige Richtung |
| 85 | - | Scheibe |
| 90 | - | Tellerfederpaket |
| 95 | - | Tellerfeder |
| 100 | - | Aussparung |
| 105 | - | Vorsprung |
| 110 | - | Deckplatte |
| 115 | - | Schrauben |
| 120, 125 | - | Dichtring |
| 130, 135 | - | Nut |

| | | |
|---|---|---|
| 140 | - | Innenwandung des Einlasses 4 |
| 145 | - | Spannring |
| 150 | - | Aussparungen |
| 155 | - | Gehäuseauswärts gewandte Öffnung |
| 160 | - | Steg |
| 175 | - | Reif |
| 180 | - | Reif |
| 195 | - | Schraube |
| 200 | - | Schraube |
| 205 | - | Klemmfläche |
| 210 | - | Klemmrippen |
| 215 | - | Gehäuseeinwärts gewandte Öffnung |
| 220 | - | Elektromagnetische Abschirmung |
| 225 | - | Zungen |
| 230 | - | dritte Dichtung |
| 235 | - | Scheibe |

## Patentansprüche

1. Tauchmotor mit einem Gehäuse, welches eine Wandung (4) mit einem wasserdichten Kabeldurchlass (5, 6; 5, 6') aufweist, welcher einen Einlass (5) in der Wandung (4) für ein Kabel (25) und einen vom Einlass (5) lösbaren Dichtkragen (6; 6') mit einer Durchführung (20) für das Kabel umfasst, wobei der Dichtkragen (6; 6') eine an der Durchführung angeordnete erste Dichtung (45; 45') aus einem weichelastischen Material und ein Mittel zur Kraftbeaufschlagung (75, 85, 90) der ersten Dichtung (45; 45') aufweist, welches zur dauerhaften Kraftbeaufschlagung der ersten Dichtung (45; 45') radial in die Durchführung (20) ausgebildet ist und zwei Klemmflächen (75, 85), zwischen welchen die erste Dichtung (45; 45') gelegen und mittels welchen die erste Dichtung (45; 45') axial kraftbeaufschlagt ist und bei welchem der Kabeldurchlass (5, 6; 5, 6') Mittel zur lösbaren Befestigung (35, 40) des Dichtkragens (6; 6') am Einlass aufweist, wobei zwischen Dichtkragen (6; 6') und Einlass (5) zumindest eine zweite Dichtung (120, 125) vorgesehen ist, **dadurch gekennzeichnet, dass** zur dauerhaften Kraftbeaufschlagung ein in axialer Richtung wirkendes Druckfederelement (90) vorgesehen ist, welches zumindest eine der Klemmflächen (75, 85) kraftbeaufschlagt.

2. Tauchmotor nach Anspruch 1, bei welchem die erste Dichtung (45, 45') zur dauerhaft axial dichtenden Anlage am Kabel (25) und an einem Innenumfang der Durchführung (20) unabhängig von der Befestigung des Dichtkragens (6; 6') am Gehäuse (3) vorgesehen ist.

3. Tauchmotor nach Anspruch 1 oder 2, bei welchem die erste Dichtung (45; 45') ein Dichtring (45; 45') ist, welcher die Längsachse (15) der Durchführung (20) für das Kabel (25) umfänglich umgibt.

4. Tauchmotor nach einem der vorangehenden Ansprüche, bei welchem die erste Dichtung (45; 45') umfänglich von einem Dichtkragengehäuse (10; 10') umgeben ist.

5. Tauchmotor nach einem der vorangehenden Ansprüche, bei welchem das Druckfederelement (90) eine Tellerfeder (90) ist.

6. Tauchmotor nach Anspruch 5, bei welchem sich das Druckfederelement (90) an einer lösbar am Dichtkragengehäuse (10; 10') angeordneten Stirnwand (110) abstützt.

7. Tauchmotor nach einem der vorhergehenden Ansprüche, bei welchem die Mittel zur Befestigung des Dichtkragens (6; 6') an der Wandung (4) eine zur Längsachse (15) der Durchführung (20) des Dichtkragens (6; 6') gewinkelte Anlagefläche (35) aufweisen, welche am Dichtkragen (6; 6') angeordnet ist.

8. Tauchmotor nach einem der vorhergehenden Ansprüche, bei welchem eine dritte Dichtung (230) zur dichtenden Anlage am Kabel (25) und an einem Innenumfang des Dichtkragengehäuses (10; 10') vorgesehen ist.

9. Tauchmotor nach einem der vorhergehenden Ansprüche, bei welchem der Dichtkragen (6; 6') ein Klemmelement (145) zur Klemmung des Kabels (25) aufweist.

10. Tauchmotor nach Anspruch 9, bei welchem das Klemmelement (145) eine die Durchführung (20) für das Kabel (25) umfänglich umgebende Fläche (205) mit umfänglich orientierten Rippen (210) aufweist.

11. Tauchmotor nach einem der Ansprüche 8 bis 10, bei welchem das Klemmelement (145) von der ersten Dichtung (45; 45') aus gesehen an einem aus dem Gehäuse (3) herausführenden Axialabschnitt der Durchführung (20) gelegen ist.

12. Tauchmotor nach einem der vorhergehenden Ansprüche, bei welchem die zweite Dichtung (120, 125) zumindest einen Dichtring (120, 125) umfasst, welcher am Außenumfang des Dichtkragens (6, 6') angeordnet ist und welcher zur Anlage am Innenumfang (140) des Einlasses (5) ausgebildet ist.

13. Tauchpumpe mit einem Tauchmotor (2) nach einem der vorhergehenden Ansprüche.

## Claims

1. A submersible motor with a housing, which comprises a wall (4) with a watertight cable feed-through (5, 6; 5, 6'), which comprises an inlet (5) in the wall (4) for a cable (25) and a sealing collar (6; 6') that has a feed-through (20) for the cable and can be detached from the inlet (5), wherein the sealing collar (6; 6') comprises a first seal (45; 45') which consists of a soft and elastic material arranged on the feed-through and means for the application of force (75, 85, 90) to the first seal (45; 45'), which is designed for permanently applying force to the first seal (45; 45') radially into the feed-through (20), and two clamping surfaces (75, 85) between which the first seal (45; 45') is exposed to an axial force and in which the cable feed-through (5, 6; 5, 6') comprises means for detachably attaching (35, 40) the sealing collar (6; 6') to the inlet, wherein at least a second seal (120, 125) is provided between the sealing collar (6; 6') and inlet (5), **characterised in that** a compression spring element (90) which acts in the axial direction is provided for the permanent application of force which applies a force to at least one of the clamping surfaces (75, 85)

2. The submersible motor according to claim 1, in which the first seal (45, 45') is provided for the permanent, axially sealing abutment to the cable (25) and to an inner periphery of the feed-through (20), independently of the attachment of the sealing collar (6; 6') to the housing (3).

3. The submersible motor according to claim 1 or 2, in which the first seal (45; 45') is a sealing ring (45; 45') that circumferentially surrounds the longitudinal axis (15) of the feed-through (20) for the cable (25).

4. The submersible motor according to one of the preceding claims, in which the first seal (45; 45') is circumferentially surrounded by a sealing collar housing (10; 10').

5. The submersible motor according to one of the preceding claims, in which the compression spring element (90) is a disk spring (90).

6. The submersible motor according to claim 5, in which the compression spring element (90) is supported by a front wall (110) detachably arranged on the sealing collar housing (10; 10').

7. The submersible motor according to one of the preceding claims, in which the means for attaching the sealing collar (6, 6') to the wall (4) of an abutment surface (35) that is angled relative to the longitudinal axis (15) of the feed-through (20) of the sealing collar (6; 6'), and situated on the sealing collar (6; 6').

8. The submersible motor according to one of the preceding claims, in which a third seal (230) is provided for establishing a tight abutment on the cable (25) and on an inner periphery of the sealing collar housing (10; 10').

9. The submersible motor according to one of the preceding claims, in which the sealing collar (6; 6') comprises a clamping element (145) for clamping the cable (25).

10. The submersible motor according to claim 9, in which the clamping element (145) comprises a surface (205) that circumferentially surrounds the feed-through (20) for the cable (25) and has circumferentially oriented ribs (210).

11. The submersible motor according to one of claims 8 to 10, in which the clamping element (145) is situated on an axial section of the feed-through (20) leading out of the housing (3) viewed from the first seal (45; 45').

12. The submersible motor according to one of the preceding claims, wherein the second seal (120, 125) comprises at least one sealing ring (120, 125), which is arranged on the outer periphery of the sealing collar (6, 6'), and designed for abutment on the inner periphery (140) of the outlet (5).

13. A submersible pump with a submersible motor (2) according to one of the preceding claims.

## Revendications

1. Moteur submersible avec un carter qui comprend une paroi (4) avec un passage pour câble (5, 6 ; 5, 6') étanche à l'eau qui comporte une entrée (5) dans la paroi (4) pour un câble (25) et une collerette d'étanchéité (6 ; 6') pouvant être ôté de l'entrée (5), avec un passage (20) pour le câble, la collerette d'étanchéité (6 ; 6') comprenant un premier joint d'étanchéité (45 ; 45') en un matériau élastique souple disposé au passage et un moyen d'application d'une force (75, 85, 90) au premier joint d'étanchéité (45 ; 45') qui est conformé pour une application permanente radiale dans le passage (20), d'une force au premier joint d'étanchéité (45 ; 45') et comporte deux surfaces de serrage (75, 85) entre lesquelles le premier joint d'étanchéité (45 ; 45') est disposé et par lesquelles une force est appliquée axialement au premier joint d'étanchéité (45 ; 45') et dans lequel le passage pour câble (5, 6 ; 5, 6') comprend des moyens pour une fixation amovible (35, 40) de la collerette d'étanchéité (6 ; 6') sur l'entrée, au moins un deuxième joint d'étanchéité (120, 125) étant prévu entre la collerette d'étanchéité (6 ; 6') et l'entrée (5), **caractérisé en ce que**, pour une application permanente d'une force, un élément de ressort à compression (90) agissant en direction axiale est prévu qui applique une force au moins à une des surfaces de serrage (75, 85).

2. Moteur submersible selon la revendication 1, dans lequel le premier joint d'étanchéité (45 ; 45') est prévu pour un appui permanent axial et rendant étanche, sur le câble (25) et sur une circonférence intérieure du passage (20), indépendamment de la fixation de la collerette d'étanchéité (6 ; 6') au carter (3).

3. Moteur submersible selon la revendication 1 ou 2, dans lequel le premier joint d'étanchéité (45 ; 45') est un joint d'étanchéité annulaire (45 ; 45') qui entoure l'axe longitudinal (15) du passage (20) pour le câble (25) de manière circonférentielle.

4. Moteur submersible selon l'une des revendications précédentes, dans lequel le premier joint d'étanchéité (45 ; 45') est entouré de manière circonférentielle par un logement pour collerette d'étanchéité (10 ; 10').

5. Moteur submersible selon l'une des revendications précédentes, dans lequel l'élément de ressort à compression (90) est une rondelle Belleville (90).

6. Moteur submersible selon la revendication 5, dans lequel l'élément de ressort à compression (90) prend appui sur une paroi frontale (110) disposée de manière amovible sur le logement de collerette d'étanchéité (10 ; 10').

7. Moteur submersible selon l'une des revendications précédentes, dans lequel les moyens pour la fixation de la collerette d'étanchéité (6 ; 6') sur la paroi (4) comprennent une surface d'appui (35) formant un angle avec l'axe longitudinal (15) du passage (20) de la collerette d'étanchéité (6 ; 6'), qui est disposée sur la collerette d'étanchéité (6 ; 6').

8. Moteur submersible selon l'une des revendications précédentes dans lequel un troisième joint d'étanchéité (230) est prévu pour un appui et rendant étanche, sur le câble (25) et sur une circonférence intérieure du logement de collerette d'étanchéité (10 ; 10').

9. Moteur submersible selon l'une des revendications précédentes, dans lequel la collerette d'étanchéité (6 ; 6') comprend un élément de serrage (145) pour le serrage du câble (25).

10. Moteur submersible selon la revendication 9, dans lequel l'élément de serrage (145) comprend une surface (205) entourant le passage (20) pour le câble (25) de manière circonférentielle, avec des ailettes (210) orientées de manière circonférentielle.

11. Moteur submersible selon l'une des revendications 8 à 10, dans lequel l'élément de serrage (145) est disposé, vu à partir du premier joint d'étanchéité (45 ; 45'), sur une partie axiale du passage (20) conduisant vers l'extérieur du carter (3).

12. Moteur submersible selon l'une des revendications précédentes, dans lequel le deuxième joint d'étanchéité (120, 125) comprend au moins un joint d'étanchéité annulaire (120, 125) qui est disposé sur la circonférence extérieure de la collerette d'étanchéité (6 ; 6') et qui est conformé pour un appui sur la circonférence intérieure (140) de l'entrée (5).

13. Pompe submersible avec un moteur submersible (2) selon l'une des revendications précédentes.
